# EUROPÄISCHE PATENTSCHRIFT

(11) **EP 3 259 839 B1**
(45) Veröffentlichungstag und Bekanntmachung des Hinweises auf die Patenterteilung: **29.09.2021**
(21) Anmeldenummer: 15741915.1
(22) Anmeldetag: 02.04.2015
(51) Int. Cl.: H02M 7/483, H02H 7/122

(54) **UMRICHTERANORDNUNG SOWIE VERFAHREN ZU DEREN KURZSCHLUSSSCHUTZ**
CONVERTER ARRANGEMENT AND METHOD FOR SHORT-CIRCUIT PROTECTION THEREOF
ENSEMBLE CONVERTISSEUR ET PROCÉDÉ DE PROTECTION CONTRE LES COURT-CIRCUITS DUDIT ENSEMBLE CONVERTISSEUR

(43) Veröffentlichungstag der Anmeldung: 27.12.2017
(73) Patentinhaber: Siemens Energy Global GmbH & Co. KG, 81739 München (DE)
(72) Erfinder: XU, Jiang, 95447 Bayreuth (DE); BAKRAN, Mark-Matthias, 91052 Erlangen (DE); SCHÖN, Andre, 91058 Erlangen (DE)
(86) Internationale Anmeldenummer: PCT/EP2015/057359
(87) Internationale Veröffentlichungsnummer: WO 2016/155837

(56) Entgegenhaltungen:
- WO-A1-2008/110129
- DE-A1-102012 209 903
- JP-B1- 5 622 978
- NORRGA STAFFAN ET AL: "Converter topologies for HVDC grids", 2014 IEEE INTERNATIONAL ENERGY CONFERENCE (ENERGYCON), IEEE, 13. Mai 2014 (2014-05-13), Seiten 1554-1561, XP032615683, DOI: 10.1109/ENERGYCON.2014.6850630 [gefunden am 2014-07-08]
- WANG YEQI ET AL: "Future HVDC-grids employing modular multilevel converters and hybrid DC-breakers", 2013 15TH EUROPEAN CONFERENCE ON POWER ELECTRONICS AND APPLICATIONS (EPE), IEEE, 2. September 2013 (2013-09-02), Seiten 1-8, XP032505277, DOI: 10.1109/EPE.2013.6631861 [gefunden am 2013-10-14]
- XIAOQIAN LI ET AL: "Protection of Nonpermanent Faults on DC Overhead Lines in MMC-Based HVDC Systems", IEEE TRANSACTIONS ON POWER DELIVERY, IEEE SERVICE CENTER, NEW YORK, NY, US, Bd. 28, Nr. 1, 1. Januar 2013 (2013-01-01) , Seiten 483-490, XP011483733, ISSN: 0885-8977, DOI: 10.1109/TPWRD.2012.2226249 in der Anmeldung erwähnt
- JUERGEN HAEFNER UND BJOERN JACOBSON: "Proactive Hybrid HVDC Breakers - A key innovation for reliable HVDC grids", PAPER PRESENTED AT THE ELECTRIC POWER SYSTEM OF THE FUTURE - INTEGRATING SUPERGRIDS AND MICROGRIDS INTERNATIONAL SYMPOSIUM IN BOLOGNA, ITALY 13-15 SEPTEMBER, 2011, CIGRE, FR , vol. 264 13 September 2011 (2011-09-13), pages 1-8, XP008172051, Retrieved from the Internet: URL:http://www05.abb.com/global/scot/scot2 21.nsf/veritydisplay/f024bf4c6291931dc1257 90d00415992/$file/0264_bologna_2011.pdf

## Beschreibung

Die Erfindung betrifft eine Umrichteranordnung umfassend einen ersten Phasenmodulzweig mit einer ersten Reihenschaltung zweipoliger Submodule, die jeweils wenigstens einen Energiespeicher und wenigstens eine Leistungshalbleiterschalteinheit umfassen, wobei der erste Phasenmodulzweig sich zwischen einem ersten Wechselspannungsanschluss und einem ersten Gleichspannungspol erstreckt, einen zweiten Phasenmodulzweig mit einer zweiten Reihenschaltung der zweipoligen Submodule, wobei der zweite Phasenmodulzweig sich zwischen dem ersten Wechselspannungsanschluss und einem zweiten Gleichspannungspol erstreckt, einen dritten Phasenmodulzweig mit einer dritten Reihenschaltung der zweipoligen Submodule, wobei der dritte Phasenmodulzweig sich zwischen einem zweiten Wechselspannungsanschluss und dem ersten Gleichspannungspol erstreckt, sowie einen vierten Phasenmodulzweig mit einer vierten Reihenschaltung der zweipoligen Submodule, wobei der vierte Phasenmodulzweig sich zwischen dem zweiten Wechselspannungsanschluss und dem zweiten Gleichspannungspol erstreckt, wobei jedes Submodul mittels einer parallel zu dessen Anschlussklemmen angeordneten Überbrückungseinheit stromrichtungsunabhängig überbrückbar ist, und wobei der erste Gleichspannungspol mit einem ersten Gleichspannungsanschluss und der zweite Gleichspannungspol mit einem zweiten Gleichspannungsanschluss verbunden sind.

Eine stromrichtungsunabhängige Überbrückung soll hierbei dann vorliegen, wenn das Submodul unabhängig von der Stromrichtung überbrückt ist.

Die Gleichspannungsanschlüsse sind üblicherweise dazu vorgesehen, die Umrichteranordnung mit einer Gleichspannungsleitung zu verbinden. Bei den Verbindungen zwischen den Gleichspannungspolen und den zugehörigen Gleichspannungsanschlussen kann es sich dementsprechend um lösbare Verbindungen handeln.

Eine artgemäße Umrichteranordnung ist aus dem Artikel "Protection of Nonpermanent Faults on DC Overhead Lines in MMC-Based HVDC Systems" von Li et al, IEEE Trans. On Power Delivery, Vol. 28, NO. 1, Jan 2013, bekannt. Umchrichteranordnungen dieser Art finden beispielsweise in der Hochspannungsgleichstromübertragung (HGÜ) Anwendung. Dabei kann elektrische Energie effizient über lange Distanzen von Hunderten bis Tausenden von Kilometern übertragen werden. Die Übertragung erfolgt meist über Gleichspannungsleitungen, die in Form von erd- bzw. seeverlegten Kabeln oder Freileitungen (,overhead lines') realisiert sind. Insbesondere im letzteren Fall können Umwelteinflüsse, wie beispielsweise Blitzeinschläge und umgefallene Bäume, einen oftmals kurzzeitigen Kurzschluss in der Gleichspannungsleitung bewirken. Bei solchen gleichspannungsseitigen Fehlern treten unten Umständen sehr hohe Kurzschlussströme auf. Die Kurzschlussströme können zu einer Beschädigung von Umrichterkomponenten führen, da sie im Allgemeinen auch durch die Phasenmodulzweige der Umrichteranordnung fließen. Daraus ergibt sich eine Notwendigkeit, für einen Kurzschlussschutz der Umrichteranordnung die Kurzschlussströme abzuschalten. Bei der bekannten Umrichteranordnung werden alle Leistungshalbleiterschalter in den Submodulen gesperrt, sobald ein gleichspannungsseitiger Kurzschluss mittels eines geeigneten Detektors festgestellt wird. Gleichzeitig werden alle Submodule mittels der zugehörigen Überbrückungseinheiten, die bei der bekannten Umrichteranordnung antiparallele Thyristoren umfassen, überbrückt bzw. ihre Klemmen kurzgeschlossen. Dazu steuert eine dazu vorgesehene Steuereinheit die Thyristoren an, in einen leitenden Zustand zu wechseln. Auf diese Weise kann wechselspannungsseitig eine Art von symmetrischem Kurzschluss aller Phasen eines an die Umrichteranordnung angeschlossenen Wechselspannungsnetzes herbeigeführt werden. Dadurch wird erreicht, dass keine Leistung mehr in die gleichspannungsseitig mit der Umrichteranordnung verbundene Gleichspannungsleitung eingespeist wird. Der Kurzschlussstrom in der Gleichspannungsleitung wird also nicht mehr durch Leistungsübertragung aufrechterhalten. Der aufgrund von Leitungsinduktivitäten in der Gleichspannungsleitung weiterhin fließende Kurzschlussstrom klingt dann vollständig ab.

Aus der WO2008/110129 A1 ist ein modularer Mehrstufenumrichter bekannt, der mittels eines Gleichspannungsschalters mit dem Gleichspannungszwischenkreis verbunden ist.

In dem Beitrag von Norrga et al., "Converter Topologies for HVDC Grids" sowie dem Beitrag von Wang et al., "Future HVDC-Grids employing Modular Multilevel Converters and Hybrid DC-Breakers" ist jeweils ein Gleichspannungsleistungsschalter beschrieben. Der dort beschriebene Gleichspannungsleistungsschalter umfasst einen Strompulsgenerator und einen Ableiterzweig in einer Parallelschaltung dazu.

Ausgehend von der bekannten Umrichteranordnung besteht die Aufgabe der Erfindung darin, den Kurzschlussschutz der Umrichteranordnung weiter zu verbessern.

Die Aufgabe wird erfindungsgemäß durch eine Umrichteranordnung gemäß dem Anspruch 1 gelöst. Dabei ist ein Gleichspannungsschalter zwischen dem ersten Gleichspannungspol und dem ersten Gleichspannungsanschluss oder zwischen dem zweiten Gleichspannungspol und dem zweiten Gleichspannungsanschluss angeordnet, wobei ein Freilaufpfad, der sich zwischen den beiden Gleichspannungsanschlüssen erstreckt und ein Halbleiterelement mit einer Sperr- und einer Durchlassrichtung umfasst, vorgesehen ist.

Die Erfindung umfasst sowohl zweiphasige als auch dreiphasige und mehrphasige Ausführungen. Dabei weist die Umrichteranordnung beispielsweise bei einer dreiphasigen Ausführung einen fünften und sechsten Phasenzweig, die in der Art der bekannten Umrichteranordnung angeordnet sind.

Gemäß der Erfindung ist es selbstverständlich möglich, sowohl den ersten Gleichspannungspol als auch den zweiten Gleichspannungspol mit den zugehörigen Gleichspannungsanschlüssen über jeweils wenigstens einen Gleichspannungsschalter zu verbinden.

Der erste Gleichspannungspol kann beispielsweise als eine positive Sammelschiene und der zweite Gleichspannungspol als ein Nullleiter realisiert sein. Denkbar ist auch, dass der erste Gleichspannungspol als Nullleiter und der zweite Gleichspannungspol als eine negative Sammelschiene realisiert sind. Entsprechend sind auch weitere Varianten möglich, wie beispielsweise, dass der erste Gleichspannungspol auf einem positiven und der zweite Gleichspannungspol auf einem negativen elektrischen Hochspannungspotenzial liegen. Die erfindungsgemäße Umrichteranordnung kann ferner Teil einer bipolaren Hochspannungsgleichstromübertragungsanlage (HGÜ) sein.

Ein Vorteil der erfindungsgemäßen Umrichteranordnung ist, dass der Gleichspannungsschalter dazu verwendet werden kann, den in der Gleichspannungsleitung nach der Überbrückung der Submodule fließenden Kurzschlussstrom auf den Freilaufpfad zu kommutieren. Auf diese Weise fließt der gleichspannungsseitige Kurzschlussstrom dann vorteilhaft nicht durch die Phasenmodulzweige der Umrichteranordnung, wodurch deren Schutz verbessert wird.

Vorteilhafterweise ist es durch die Kombination der Überbrückungseinheiten und des Gleichspannungsschalters nicht mehr notwendig, den Gleichspannungsschalter beziehungsweise dessen Sperrspannung zum Schalten bei voller gleichspannungsseitiger Spannung auszulegen. Es ist vielmehr ausreichend, wenn der Gleichspannungsschalter lediglich zum Kommutieren des Kurzschlussstromes auf den Freilaufpfad eingerichtet ist. Beispielsweise kann statt einer Sperrspannung von 320 kV eine Sperrspannung von nunmehr 10 kV ausreichend sein. Dadurch wird vorteilhaft der leistungselektronische Schaltungsaufwand für den Gleichspannungsschalter reduziert. Zudem sind die Verluste in einem Normalbetrieb der Umrichteranordnung relativ niedrig.

Die Überbrückungseinheit umfasst geeigneterweise einen Überbrückungszweig, der parallel zu den beiden Anschlüssen bzw. Polen der Submodule angeordnet ist, so dass unabhängig von der Stromrichtung ein Kurzschluss an den Anschlüssen herbeigeführt werden kann. Die Überbrückungseinheit kann mit einer Steuereinrichtung verbunden sein, mittels der die Überbrückungseinheit gesteuert werden kann, die insbesondere also die Überbrückung der Submodule einleiten kann. Vorzugsweise umfasst die Überbrückungseinheit antiparallel geschaltete Thyristoren. Zur stromrichterunabhängigen Überbrückung der Submodule werden die Thyristoren gleichzeitig gezündet. Auf diese Weise ist eine besonders günstige und zuverlässige Überbrückungseinheit bereitgestellt.

Zur Detektion eines Kurzschlusses in der Gleichspannungsleitung kann eine Detektionseinrichtung vorgesehen sein, beispielsweise eine Strommeßeinheit, die Ausgangsseitig beispielsweise mit der Steuereinrichtung verbunden ist.

Gemäß einer vorteilhaften Ausführungsform der Erfindung umfasst das Halbleiterelement im Freilaufpfad wenigstens eine Diode und/oder einen Thyristor. Die Diode bzw. der Thyristor verhindert einen Kurzschluss zwischen den beiden Gleichspannungspolen der Gleichspannungsleitung in einem Normalbetrieb der Umrichteranordnung. Der Thyristor wird geeigneterweise in einem Kurzschlussfall gezündet, um den Kurzschlussstrom über den Freilaufpfad zu ermöglichen. Geeigneterweise weist der Freilaufpfad eine einem Nennpotenzial entgegengesetzte Polarität auf. Auf diese Weise führt der Freilaufpfad in einem Normalbetrieb der Umrichteranordnung gemäß der gewählten Durchlassrichtung der Diode im Wesentlichen keinen Strom. Das Halbleiterelement kann auch durch eine Reihenschaltung mehrerer Dioden und/oder Thyristoren gebildet sein.

Bevorzugt ist im Freilaufpfad zusätzlich zum Halbleiterelement ein Energieabsorber angeordnet, wobei der Energieabsorber in Reihe zum Halbleiterelement angeordnet ist. Der Energieabsorber, der beispielsweise ein Widerstandselement sein kann ist dazu eingerichtet, die Energie des Kurzschlussstromes abzuleiten, beispielsweise durch Umwandlung in Wärme. Auf diese Weise kann ein schnelleres Abklingen des Kurzschlussstromes in der Gleichspannungsleitung bewirkt werden.

Der Energieabsorber kann auch ein Überspannungsableiter beziehungsweise eine Reihenschaltung von Überspannungsableitern umfassen. Eine solche Ausführung hat den Vorteil, dass ein zusätzlicher Schutz der Umrichteranordnung bereitgestellt ist.

Die Submodule der Umrichteranordnung können, müssen aber nicht notwendigerweise, alle gleichartig aufgebaut sein.

Vorzugsweise sind die Submodule als Halbbrückenschaltungen ausgeführt. Solche Halbbrückenschaltungen sind beispielsweise in der DE 101 03 031 B4 beschrieben. Aufgrund der verhältnismäßig kleinen Verluste sind solche Submodule besonders kostengünstig im Betrieb. Die Leistungshalbleiterschalter der Submodule sind geeigneterweise abschaltbare Leistungshalbleiter, wie beispielsweise IGBTs, GTOs oder dergleichen.

Gemäß der Erfindung umfasst der Gleichspannungsschalter wenigstens ein Leistungshalbleiterschaltmodul mit einem Leistungshalbleiterschalter. Der Leistungshalbleiterschalter ist beispielsweise ein sogenannter solid-state-Schalter mit einem Integrated Gate Bipolar Transistor (IGBT), dem eine Freilaufdiode antiparallel geschaltet ist. Der Gleichspannungsschalter kann eine Reihenschaltung von mehreren solcher Leistungshalbleiterschaltmodulen umfassen. Die Anzahl der Leistungshalbleiterschaltmodule in der Reihenschaltung ist geeigneterweise an die jeweilige Anwendung angepasst. Die Leistungshalbleiterschaltmodule werden im Kurzschlussfall beispielsweise mittels einer dazu eingerichteten Steuerung ausgeschaltet, so dass der Kurzschlussstrom auf den Freilaufpfad kommutieren kann.

Bevorzugt weist der Gleichspannungsschalter eine Reihenschaltung aus dem wenigstens einen Leistungshalbleiterschaltermodul und wenigstens einem Trennschalter auf. Der Trennschalter kann ein mechanischer Schalter sein. Mittels des Trennschalters kann die Gleichspannungsleitung unterbrochen werden, nachdem der Strom im Trennschalter abgeklungen ist. Nach dem Öffnen des Trennschalters kann auch der wechselspannungsseitige Kurzschlussstrom auf einfache Weise unterbrochen werden, beispielsweise durch ein Sperren der Überbrückungseinheiten.

Der Gleichspannungsschalter umfasst ferner wenigstens einen Überspannungsableiter. Der wenigstens eine Überspannungsableiter ist parallel zu dem wenigstens einen Leistungshalbleiterschaltmodul oder der Reihenschaltung von Leistungshalbleiterschaltmodulen angeordnet. Der Überspannungsableiter begrenzt die über den Leistungshalbleiterschaltmodulen abfallende Spannung und kann darüber hinaus als ein Energie absorbierendes Element verwendet werden.

Wie bereits zuvor erörtert, muss die Spannungsfestigkeit bzw. Sperrfähigkeit des Gleichspannungsschalters der erfindungsgemäßen Umrichteranordnung nicht auf einen gleichspannungsseitigen Spannungsnennwert, das heißt die bei einem Normalbetrieb zwischen den beiden Gleichspannungsanschlüssen abfallende Spannung ausgelegt sein. Bevorzugt beträgt die Spannungsfestigkeit des Gleichspannungsschalters weniger als 40%, vorzugsweise zwischen 5% und 20% des Spannungsnennwertes. Dies senkt die elektrischen Verluste und damit die Betriebskosten der Umrichteranordnung.

Die Erfindung betrifft ferner ein Verfahren zum Kurzschlussschutz der erfindungsgemäßen Umrichteranordnung.

Die Aufgabe der Erfindung besteht darin, ein solches Verfahren vorzuschlagen, dass möglichst einfach und zuverlässig ist.

Die Erfindung löst diese Aufgabe durch ein Verfahren, bei dem bei einem gleichspannungsseitigen Kurzschluss alle Submodule stromrichtungsunabhängig überbrückt werden, worauf der Gleichspannungsschalter abgeschaltet wird, so dass ein gleichspannungsseitiger Kurzschlussstrom auf den Freilaufpfad kommutiert wird.

Bei dem erfindungsgemäßen Verfahren wird also in einem gleichspannungsseitigen Kurzschlussfall mittels der Überbrückungseinheiten ein wechselspannungsseitiger Kurzschluss in der Umrichteranordnung erzeugt, worauf mittels des Gleichspannungsschalters der Kurzschlussstrom von den Phasenmodulzweigen der Umrichteranordnung auf den Freilaufpfad aktiv kommutiert wird.

Die Vorteile des erfindungsgemäßen Verfahrens ergeben sich aus den zuvor beschriebenen Vorteilen der erfindungsgemäßen Umrichteranordnung.

Im Folgenden soll die Erfindung anhand von Figuren 1 bis 3 näher erläutert werden.
Figur 1 zeigt ein Ausführungbeispiel einer erfindungsgemäßen Umrichteranordnung in schematischer Darstellung;
Figur 2 zeigt ein zweipoliges Submodul der Umrichteranordnung der Figur 1 in schematischer Darstellung;
Figur 3 zeigt den schematischen Verlauf von Strömen in der Umrichteranordnung der Figur 1.

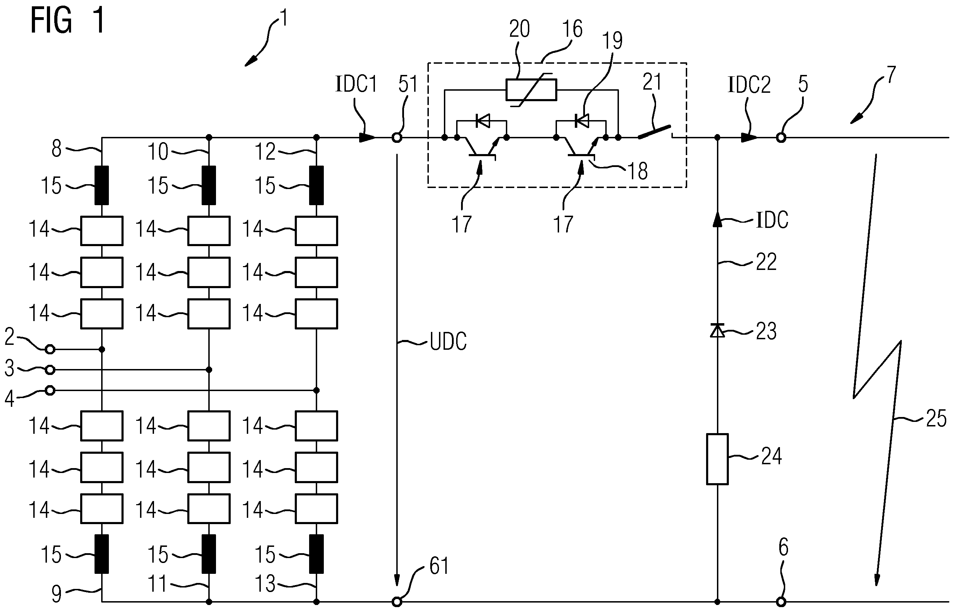

Im Einzelnen ist in Figur 1 ein Ausführungsbeispiel einer erfindungsgemäßen Umrichteranordnung 1 dargestellt. Die Umrichteranrordnung 1 umfasst drei Wechselspannungsanschlüsse 2, 3 und 4, die dazu eingerichtet sind, die Umrichteranordnung 1 mit einem dreiphasigen Wechselspannungsnetz zu verbinden. Ferner umfasst die Umrichteranordnung 1 einen ersten Gleichspannungsanschluss 5 und einen zweiten Gleichspannungsanschluss 6 zum Verbinden mit einer Gleichspannungsleitung 7. Die Umrichteranordnung 1 ist demnach im vorliegenden Ausführungsbeispiel dreiphasig ausgebildet, wobei die Erfindung selbstverständlich nicht auf eine dreiphasige Ausführung beschränkt ist. Sie umfasst einen ersten Phasenzweig 8, der sich zwischen einem ersten Gleichspannungspol 51 und dem ersten Wechselspannungsanschluss 2 erstreckt, einen zweiten Phasenmodulzweig 9, der sich zwischen dem ersten Wechselspannungsanschluss 2 und einem zweiten Gleichspannungspol 61 erstreckt, einen dritten Phasenmodulzweig 10, der sich zwischen dem ersten Gleichspannungspol 51 und einem zweiten Wechselspannungsanschluss 3 erstreckt, einen vierten Phasenmodulzweig 11, der sich zwischen dem zweiten Wechselspannungsanschluss und dem zweiten Gleichspannungspol 61 erstreckt, einen fünften Phasenmodulzweig 12, der sich zwischen dem ersten Gleichspannungspol 51 und dem dritten Wechselspannungsanschluss 4 erstreckt sowie einen sechsten Phasenmodulzweig 13, der sich zwischen dem dritten Wechselspannungsanschluss 4 und dem zweiten Gleichspannungspol 61 erstreckt. Der erste Gleichspannungspol 51 ist mit dem ersten Gleichspannungsanschluss 5 verbunden. Der zweite Gleichspannungspol 61 ist mit dem zweiten Gleichspannungsanschluss 6 verbunden.

Der erste Phasenmodulzweig 8 umfasst eine erste Reihenschaltung von zweipoligen Submodulen 14 sowie eine zu der Reihenschaltung der zweipoligen Submodule 14 in Reihe angeordnete Glättungsdrossel 15. Entsprechend umfassen die Phasenmodulzweige 9, 10, 11, 12, 13 jeweils eine Reihenschaltung der Submodule 14 und eine dazu in Reihe geschaltete Glättungsdrossel 15. In dem in Figur 1 dargestellten Ausführungsbeispiel der Umrichteranordnung 1 weist jedes der Phasenmodulzweige 8 - 13 drei Submodule 14 auf. Die Anzahl der Submodule 14 in jedem Phasenmodulzweig ist im Allgemeinen jedoch an die jeweilige Anwendung der Umrichteranordnung 1 angepasst und kann jede beliebige Anzahl sein.

In dem in Figur 1 dargestellten Ausführungsbeispiel sind alle Submodule 14 der Umrichteranordnung 1 gleichartig aufgebaut. Die Phasenmodulzweige 8 - 13 bilden zusammen mit den Wechselspannungsanschlüssen 2 - 4 und dem Gleichspannungsanschlüssen 5, 6 demnach einen sogenannten modularen Mehrstufenumrichter (MMC) aus. Ein solcher Umrichter ist beispielsweise aus der DE 10 103 031 B4 bekannt. Mittels einer geeigneten Steuerung (in Figur 1 nicht dargestellt) kann in den Phasenmodulzweigen 8 - 13 eine vorgegebene Spannung erzeugt werden, so dass gleichspannungsseitig der Phasenmodulzweige 8 - 13 eine Spannung UDC abfällt.

Die Umrichteranordnung 1 umfasst ferner einen Gleichspannungsschalter 16, der zwischen einem Potenzialpunkt 51 zwischen dem ersten Phasenmodulzweig 8 und dem dritten Phasenmodulzweig 10 und dem ersten Gleichspannungsanschluss 5 angeordnet ist. Der Gleichspannungsschalter 16 weist eine Reihenschaltung von Leistungshalbleiterschaltmodulen 17 auf, wobei jedes Leistungshalbleiterschaltmodul 17 einen IGBT 18 sowie eine dazu antiparallel geschaltete Freilaufdiode 19 aufweist. In Parallelschaltung zu den Leistungshalbleiterschaltmodulen 17 ist ein Überspannungsableiter 20 angeordnet. In Reihe zu den Leistungshalbleiterschaltmodulen 17 ist ferner ein Trennschalter 21 angeordnet, der im dargestellten Ausführungsbeispiel ein mechanischer Schalter ist.

Die Umrichteranordnung 1 umfasst ferner einen Freilaufpfad 22. Der Freilaufpfad 22 ist parallel zu den Phasenmodulzweigen 8 - 13 angeordnet und erstreckt sich zwischen den beiden Gleichspannungsanschlüssen 5, 6. Der Freilaufpfad weist ferner ein Halbleiterelement 23 auf, der als eine Halbleiterdiode realisiert ist. Darüber hinaus weist der Freilaufpfad 22 einen Energieabsorber 24 auf, der in Reihe zum Halbleiterelement 23 angeordnet ist.

Eine solche Umrichteranordnung 1 kann insbesondere in einem gleichspannungsseitigen Kurzschlussfall vor Schäden geschützt werden. Der Kurzschluss ist in Figur 1 durch den gezackten Pfeil 25 angedeutet.

In den nachfolgenden Figuren soll näher auf die Funktionsweise der Umrichteranordnung 1 sowie deren Schutzfunktion eingegangen werden, wobei mit IDC1 der Strom durch den Gleichspannungsschalter 16 bezeichnet wird, mit IDC2 der Strom in Gleichspannungsleitung 7 bezeichnet wird und mit ICD der Strom im Freilaufpfad 22 bezeichnet wird.

Die Submodule 14 der Umrichteranordnung 1 der Figur 1 sind als Halbbrückenschaltungen realisiert.

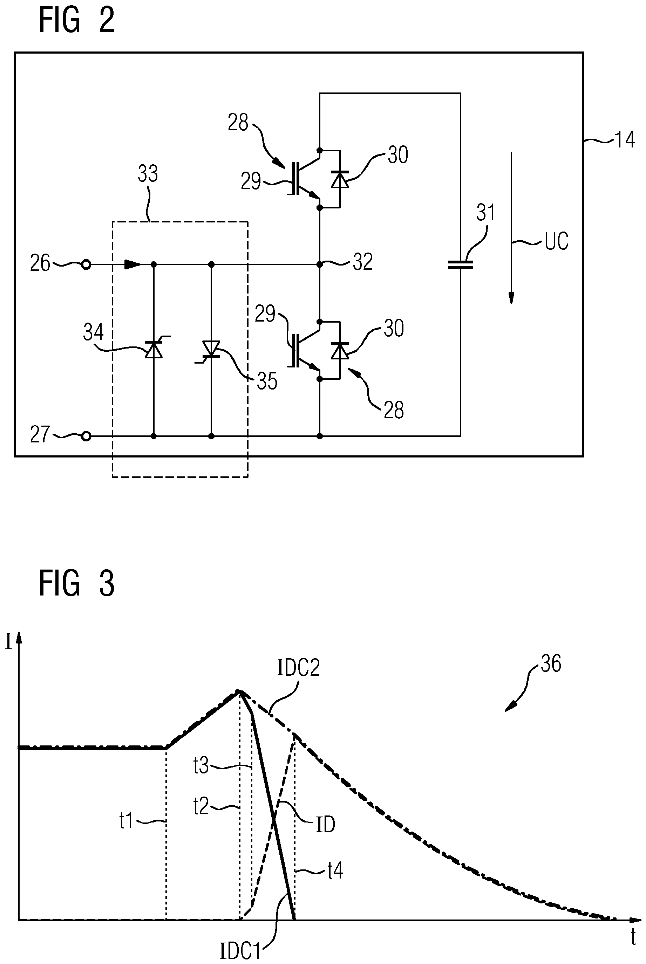

Figur 2 zeigt den prinzipiellen Aufbau eines der Submodule 14 der Umrichteranordnung 1 der Figur 1. Das Submodul 14 umfasst eine erste Anschlussklemme 26 und eine zweite Anschlussklemme 27. Ferner umfasst das Submodul 14 zwei in Reihe geschaltete Leistungshalbleiterschalteinheiten 28. Jede der beiden Leistungshalbleiterschalteinheiten 28 umfasst einen Leistungshalbleiterschalter 29, der in dem in Figur 2 dargestellten Ausführungsbeispiel ein IGBT ist, sowie eine dazu antiparallel geschaltete Freilaufdiode 30. Parallel zu der Reihenschaltung der Leistungshalbleiterschalteinheiten 28 ist ein Energiespeicher 31 angeordnet, der im vorliegenden Ausführungsbeispiel des Submoduls 14 ein Leistungskondensator ist. Am Leistungskondensator 31 fällt eine Spannung, die in Figur 2 mit UC bezeichnet ist.

Die zweite Anschlussklemme 27 des Submoduls 14 ist mit einem Pol des Leistungskondensators 31 verbunden, die erste Anschlussklemme 26 des Submoduls 14 ist mit einem Potenzialpunkt 32 zwischen den beiden Leistungshalbleiterschalteinheiten 28 verbunden.

Das Submodul 14 umfasst ferner eine Überbrückungseinheit 33, die derart mit den Anschlüssen 26, 27 verbunden ist, dass sie das Submodul 14 überbrücken beziehungsweise die beiden Anschlussklemmen 26, 27 kurzschliessen kann. Die Überbrückungseinheit 33 weist zwei antiparallel geschaltete Thyristoren 34 und 35 auf, die eine stromrichtungsunabhängige Überbrückung des Submoduls 40 bereitstellen können. Zur Überbrückung des Submoduls 14 werden die beiden Thyristoren mittels einer nicht dargestellten Steuerungseinheit angesteuert, gleichzeitig zu zünden.

Figur 3 zeigt eine Skizze der zeitlichen Verläufe der drei Ströme IDC1, IDC2 und ID des Ausführungsbeispiels der Umrichteranordnung der Figur 1 in einem Diagramm 36. Auf der Abszisse t des Diagramms 36 ist die ablaufende Zeit und auf der Ordinate I die Stromwerte zu gegebenen Zeiten aufgetragen. Die Stromrichtung der drei Ströme IDC1, IDC2, ID im Normalbetrieb ist in Fig. 1 durch entsprechende Pfeile angedeutet.

Zu einem Zeitpunkt, der im Diagramm 36 als eine unterbrochene Linie t1 gekennzeichnet ist, tritt ein Fehler, beispielsweise ein Kurzschluss in der Gleichspannungsleitung 7 auf. Ab diesem Zeitpunkt steigen die Ströme IDC1 und IDC2 an. Bis zu einem Zeitpunkt, der als eine unterbrochene Linie t2 gekennzeichnet ist, stimmen die Werte der Ströme IDC1 und IDC2 überein. Es ist erkennbar, dass aufgrund der Polarität der Diode 23 entgegen dem im Normalbetrieb vorliegenden Nennpotenzial der Freilaufpfad im Normalbetrieb im Wesentlichen stromlos ist.

Zu dem mit t2 bezeichneten Zeitpunkt wird der Fehler mittels einer geeigneten Fehlererkennungseinrichtung detektiert. Daraufhin werden alle Überbrückungseinheiten 33 in den Phasenmodulzweigen 8 bis 13 angesteuert, die ihnen zugeordneten Submodule 14 zu überbrücken, das heißt, die Thyristoren 34 und 35 werden in jedem Submodul 14 gezündet. Auf diese Weise werden die Phasen des wechselspannungsseitig mit den Wechselspannungsanschlüssen 2, 3, 4 verbundenen Wechselspannungsnetzes kurzgeschlossen. Mit anderen Worten wird das Wechselspannungsnetz von der Gleichspannungsseite getrennt, so dass der Kurzschlussstrom nicht mehr aus dem Wechselspannungsnetz gespeist, also mit Energie versorgt werden kann. Ab diesem Zeitpunkt sinken die Werte der Ströme IDC1 und IDC2.

Zu einem mit der unterbrochenen Linie t3 gekennzeichneten Zeitpunkt werden die Leistungshalbleiterschalter 18 der Leistungshalbleiterschaltmodule 17 angesteuert, abzuschalten. Aufgrund der Sperrspannung der Leistungshalbleiterschalter 17 wird der Strom mit Hilfe des Überspannungsableiters 20, der auch als eine Reihenschaltung von Überspannungsableitern realisiert sein kann, auf den Freilaufpfad 22 kommutiert. Ab diesem Zeitpunkt sinkt der Wert des Stromes IDC1 sehr schnell auf null.

Sobald IDC1 auf null oder nahezu null abgesunken ist, was in Figur 3 zu einem Zeitpunkt geschieht, der durch eine mit t4 gekennzeichnete unterbrochene Linie angedeutet ist, kann der mechanische Trennschalter 21 geöffnet werden. Der verbleibende Kurzschlussstrom ID in der Gleichspannungsleitung 7, dessen Wert dann dem Wert des Stromes IDC2 entspricht, fließt ab diesem Zeitpunkt vollständig über den Freilaufpfad 22. ID klingt entsprechend einer RL-Konstante der Gleichspannungsleitung 7 ab. Das Abklingen des Stromes ID wird durch den Energieabsorber 24 zusätzlich beschleunigt.

## Patentansprüche

1. Umrichteranordnung (1) umfassend
- einen ersten Phasenmodulzweig (8) mit einer ersten Reihenschaltung zweipoliger Submodule (14), die jeweils wenigstens einen Energiespeicher (31) und wenigstens zwei in Reihe geschaltete einen Leistungshalbleiterschalter (29) umfassen, wobei der erste Phasenmodulzweig (8) sich zwischen einem ersten Wechselspannungsanschluss (3) und einem ersten Gleichspannungspol (51) erstreckt,
- einen zweiten Phasenmodulzweig (9) mit einer zweiten Reihenschaltung der zweipoligen Submodule (14), wobei der zweite Phasenmodulzweig (9) sich zwischen dem ersten Wechselspannungsanschluss (3) und einem zweiten Gleichspannungspol (61) erstreckt,
- einen dritten Phasenmodulzweig (10) mit einer dritten Reihenschaltung der zweipoligen Submodule (14), wobei der dritte Phasenmodulzweig (10) sich zwischen einem zweiten Wechselspannungsanschluss (4) und dem ersten Gleichspannungspol (51) erstreckt,
- einen vierten Phasenmodulzweig (11) mit einer vierten Reihenschaltung der zweipoligen Submodule (14), wobei der vierte Phasenmodulzweig (11) sich zwischen dem zweiten Wechselspannungsanschluss (4) und dem zweiten Gleichspannungspol (61) erstreckt,
wobei jedes Submodul (14) mittels einer parallel zu dessen Anschlussklemmen (26, 27) angeordneten Überbrückungseinheit (33) stromrichtungsunabhängig überbrückbar ist, und wobei der erste Gleichspannungspol (51) mit einem ersten Gleichspannungsanschluss (5) und der zweite Gleichspannungspol (61) mit einem zweiten Gleichspannungsanschluss (6) verbunden sind,
wobei ein Gleichspannungsschalter (16) zwischen dem ersten Gleichspannungspol (51) und dem ersten Gleichspannungsanschluss (5) oder zwischen dem zweiten Gleichspannungspol (61) und dem zweiten Gleichspannungsanschluss (6) angeordnet ist, und
- wobei ein Freilaufpfad (22) sich zwischen den beiden Gleichspannungsanschlüssen (5, 6) erstreckt und ein Halbleiterelement (23) mit einer Sperr- und einer Durchlassrichtung umfasst, wobei
der Gleichspannungsschalter (16) wenigstens ein Leistungshalbleiterschaltmodul (17) mit einem Leistungshalbleiterschalter (18) umfasst, wobei
der Gleichspannungsschalter (16) einen Überspannungsableiter (20) umfasst, der parallel zu dem wenigstens einen Leistungshalbleiterschaltmodul (17) angeordnet ist, wobei die Umrichteranordnung auf eine gleichspannungsseitige Nennspannung von mindestens 320 kV ausgelegt ist und der Gleichspannungsschalter eine Sperrspannung von höchstens 10 kV aufweist.

2. Umrichteranordnung (1) nach Anspruch 1, wobei die Überbrückungseinheit (33) antiparallel geschaltete Thyristoren (34, 35) umfasst.

3. Umrichteranordnung (1) nach einem der vorangehenden Ansprüche, wobei das Halbleiterelement (23) im Freilaufpfad wenigstens eine Diode und/oder einen Thyristor umfasst.

4. Umrichteranordnung (1) nach einem der vorangehenden Ansprüche, wobei im Freilaufpfad (22) ein Energieabsorber (24) in Reihe zum Halbleiterelement (23) angeordnet ist.

5. Umrichteranordnung (1) nach einem der vorangehenden Ansprüche, wobei die Submodule (14) als Halbbrückenschaltungen ausgeführt sind.

6. Umrichteranordnung (1) nach Anspruch 1, wobei der Gleichspannungsschalter (16) eine Reihenschaltung aus dem wenigstens einen Leistungshalbleiterschaltmodul (17) und wenigstens einem Trennschalter (21) aufweist.

7. Umrichteranordnung (1) nach einem der vorangehenden Ansprüche, wobei der Gleichspannungsschalter (16) eine Spannungsfestigkeit aufweist, die kleiner als 40% eines gleichspannungsseitigen Spannungsnennwertes der Umrichteranordnung (1) ist.

8. Verfahren zum Kurzschlussschutz einer Umrichteranordnung (1) nach Anspruch 1, bei dem bei einem gleichspannungsseitigen Kurzschluss
- alle Submodule (14) stromrichtungsunabhängig überbrückt werden, worauf
der Gleichspannungsschalter (16) abgeschaltet wird, so dass ein gleichspannungsseitiger Kurzschlussstrom auf den Freilaufpfad (22) kommutiert wird.

## Claims

1. Converter arrangement (1) comprising
- a first phase module branch (8) having a first series circuit containing two-pole submodules (14), which each comprise at least one energy store (31) and at least two power semiconductor switches (29) connected in series, wherein the first phase module branch (8) extends between a first AC voltage connection (3) and a first DC voltage pole (51),
- a second phase module branch (9) having a second series circuit containing the two-pole submodules (14), wherein the second phase module branch (9) extends between the first AC voltage connection (3) and a second DC voltage pole (61),
- a third phase module branch (10) having a third series circuit containing the two-pole submodules (14), wherein the third phase module branch (10) extends between a second AC voltage connection (4) and the first DC voltage pole (51),
- a fourth phase module branch (11) having a fourth series circuit containing the two-pole submodules (14), wherein the fourth phase module branch (11) extends between the second AC voltage connection (4) and the second DC voltage pole (61),
wherein each submodule (14) can be bypassed in a manner independent of current direction by means of a bypass unit (33) arranged in parallel with the connection terminals (26, 27) of said submodule, and wherein the first DC voltage pole (51) is connected to a first DC voltage connection (5) and the second DC voltage pole (61) is connected to a second DC voltage connection (6),
wherein a DC voltage switch (16) is arranged between the first DC voltage pole (51) and the first DC voltage connection (5) or between the second DC voltage pole (61) and the second DC voltage connection (6), and
- wherein a freewheeling path (22) extends between the two DC voltage connections (5, 6) and comprises a semiconductor element (23) having a reverse and a forward direction, wherein
the DC voltage switch (16) comprises at least one power semiconductor switching module (17) having a power semiconductor switch (18), wherein
the DC voltage switch (16) comprises a surge arrester (20), which is arranged in parallel with the at least one power semiconductor switching module (17),
wherein the converter arrangement is designed for a DC-voltage-side rated voltage of at least 320 kV and the DC voltage switch has a reverse voltage of at most 10 kV.

2. Converter arrangement (1) according to Claim 1, wherein the bypass unit (33) comprises antiparallel-connected thyristors (34, 35).

3. Converter arrangement (1) according to either of the preceding claims, wherein the semiconductor element (23) in the freewheeling path comprises at least one diode and/or a thyristor.

4. Converter arrangement (1) according to one of the preceding claims, wherein an energy absorber (24) is arranged in series with the semiconductor element (23) in the freewheeling path (22).

5. Converter arrangement (1) according to one of the preceding claims, wherein the submodules (14) are embodied as half-bridge circuits.

6. Converter arrangement (1) according to Claim 1, wherein the DC voltage switch (16) has a series circuit composed of the at least one power semiconductor switching module (17) and at least one isolating switch (21).

7. Converter arrangement (1) according to one of the preceding claims, wherein the DC voltage switch (16) has a dielectric strength that is lower than 40% of a DC-voltage-side rated voltage value of the converter arrangement (1).

8. Method for the short-circuit protection of a converter arrangement (1) according to Claim 1, in which, in the event of a DC-voltage-side short circuit,
- all submodules (14) are bypassed in a manner independent of current direction, whereupon
the DC voltage switch (16) is turned off, with the result that a DC-voltage-side short-circuit current is commutated onto the freewheeling path (22).

## Revendications

1. Ensemble (1) convertisseur comprenant
- une première branche (8) de module de phase ayant un premier circuit série de sous-modules (14) bipolaires, qui comprennent chacun au moins un accumulateur (31) d'énergie et au moins deux interrupteurs (29) à semi-conducteur de puissance montés en série, la première branche (8) de module de phase s'étendant entre une première borne (3) de tension alternative et un premier pôle (51) de tension continue,
- une deuxième branche (9) de module de phase ayant un deuxième circuit série des sous-modules (14) bipolaires, la deuxième branche (9) de module de phase s'étendant entre la première borne (3) de tension alternative et un deuxième pôle (61) de tension continue,
- une troisième branche (10) de module de phase ayant un troisième circuit série des sous-modules (14) bipolaires, la troisième branche (10) de module de phase s'étendant entre une deuxième borne (4) de tension alternative et le premier pôle (51) de tension continue,
- une quatrième branche (11) de module de phase ayant un quatrième circuit série des sous-modules (14) bipolaires, la quatrième branche (11) de module de phase s'étendant entre la deuxième borne (4) de tension alternative et le deuxième pôle (61) de tension continue,
dans lequel chaque sous-module (14) peut, au moyen d'une unité (3) de shuntage montée en parallèle à ses bornes (26, 27) de connexion, être shunté indépendamment du sens du courant et dans lequel le premier pôle (51) de tension continue est relié à une première borne (5) de tension continue et le deuxième pôle (61) de tension continue est relié à une deuxième borne (6) de tension continue,
dans lequel un interrupteur (16) à tension continue est monté entre le premier pôle (51) de tension continue et la première borne (5) de tension continue ou entre le deuxième pôle (61) de tension continue et la deuxième borne (6) de tension continue, et
- dans lequel un trajet (22) de roue libre s'étend entre les deux bornes (5,6) de tension continue et comprend un élément (23) à semi-conducteur ayant un sens bloquant et un sens passant, dans lequel
l'interrupteur (16) à tension continue comprend au moins un module (17) de commutation à semi-conducteur de puissance ayant un interrupteur (18) à semi-conducteur de puissance,
dans lequel l'interrupteur (16) à tension continue comprend un parafoudre (20) qui est monté en parallèle au au moins un module (17) de commutation à semi-conducteur de puissance, l'ensemble convertisseur étant conçu pour une tension nominale du côté de la tension continue d'au moins 320 kV et l'interrupteur à tension continue ayant une tension de blocage de 10 kV au plus.

2. Ensemble (1) convertisseur suivant la revendication 1, dans lequel l'unité (33) de shuntage comprend des thyristors (34, 35) montés tête bêche.

3. Ensemble (1) convertisseur suivant l'une des revendications précédentes, dans lequel l'élément (23) à semi-conducteur dans le trajet de roue libre comprend au moins une diode et/ou un thyristor.

4. Ensemble (1) convertisseur suivant l'une des revendications précédentes, dans lequel dans le trajet (22) de roue libre un absorbeur (24) d'énergie est monté en série avec l'élément (23) à semi-conducteur.

5. Ensemble (1) convertisseur suivant l'une des revendications précédentes, dans lequel les sous-modules (14) sont réalisés sous la forme de circuits à demi-pont.

6. Ensemble (1) convertisseur suivant la revendication 1, dans lequel l'interrupteur (16) à tension continue a un circuit série composé du au moins un module (17) de commutation à semi-conducteur de puissance et d'au moins un sectionneur (21).

7. Ensemble (1) convertisseur suivant l'une des revendications précédentes, dans lequel l'interrupteur (16) à tension continue a une rigidité diélectrique, qui représente moins de 40% d'une valeur nominale de tension, du côté de la tension continue, de l'ensemble (1) convertisseur.

8. Procédé de protection vis-à-vis d'un court-circuit d'un ensemble (1) convertisseur suivant la revendication 1, dans lequel s'il se produit un court-circuit du côté de la tension continue,
- on shunte tous les sous-modules (14) indépendamment du sens du courant, après quoi
on ouvre l'interrupteur (16) à tension continue de manière à commuter un courant de court-circuit du côté de la tension continue sur le trajet (22) de roue libre.
